# EUROPÄISCHE PATENTANMELDUNG

(11) **EP 1 281 985 A1**
(43) Veröffentlichungstag der Anmeldung: **05.02.2003**
(21) Anmeldenummer: 01118259.9
(22) Anmeldetag: 30.07.2001
(51) Int. Cl.: G01V 1/00

(54) **Verfahren und Vorrichtung zur Wiedergabe von Festkörperschwingungen zur Vorhersage von Bruchvorgängen in Festkörpern, insbesondere in der Erdkruste**

(71) Anmelder: Fraunhofer-Gesellschaft zur Förderung der angewandten Forschung e.V., 80636 München (DE)
(72) Erfinder: Müller-Dombois, Florian, Dr., 50674 Köln (DE)
(74) Vertreter: Hilleringmann, Jochen, Dipl.-Ing.

(57) **Zusammenfassung**

Die Vorrichtung zur Wiedergabe von Festkörperschwingungen zur Vorhersage von Bruchvorgängen in einem Festkörper, insbesondere in der Erdkruste, ist versehen mit mindestens einem Schwingungsaufnahmegerät (10) zur Aufnahme von Schwingungsdaten von der Oberfläche eines Festkörpers, einem Datenumwandler zur Umwandlung der von dem Schwingungsaufnahmegerät aufgenommen Schwingungsdaten, wobei der Datenumwandler die Aufnahmezeit der Schwingungsdaten derart komprimiert, dass der Frequenzbereich des Schwingungssignals in den hörbaren Frequenzbereich des Menschen reicht und einem Audioverstärker, der die umgewandelten Daten abspielt. Ferner weist die Vorrichtung eine Frequenzweiche, mindestens einen Lautsprecher (16) und einen Soundfloor (18) auf, wobei die vom Audioverstärker (14) abgespielten Daten über die Frequenzweiche entsprechend ihrer Frequenzen an den Lautsprecher oder den Soundfloor weitergeleitet werden.

## Beschreibung

Die vorliegende Erfindung bezieht sich auf ein Verfahren und eine Vorrichtung zur Wiedergabe von Festkörperschwingungen zur Vorhersage von Bruchvorgängen in Festkörpern, insbesondere in der Erdkruste und somit zur Erdbebenvorhersage.

Das wichtigste Messgerät für die Erdbebenforschung ist das Seismometer. Die mit dem Seismometer erhobenen Daten bilden die Grundlage seismologischer Erforschung des Erdinnern. Seit der Erfindung des Seismometers vor gut hundert Jahren war die Verbesserung des Messgerätes und die globale Vervielfältigung der Messstationen eine der vorrangigsten Aufgaben der Seismologie. Die Messungen brachten innerhalb kurzer Zeit große Fortschritte im Verständnis der inneren Struktur und des Aufbaus der Erde. Inzwischen gibt es ein globusumfassendes Netzwerk von seismischen Stationen, die rund um die Uhr präzise Daten erheben. Die Archive seismischer Registrierung verfügen über einen sehr großen Bestand von Seismogrammen, der ständig wächst.

Im gleichen Maß, wie sich die strukturelle Beschreibung des Erdaufbaus verfeinert, stagnieren die Fortschritte in der temporal orientierten Erdbebenvorhersageforschung. Es fehlt nach wie vor an einer zeitlichen Vorausbestimmung, d.h. einer lang-, mittel- und kurzfristigen Vorhersage von Ort und Größe eines Erdbebens.

Bisher nämlich werden Bodenschwingungen in der Geophysik als Seismogramme, d.h. als Kurve in einem kartesischen Koordinatensystem dargestellt.

Um aus dem komplexen Signal eine brauchbare, übersichtliche Information zu extrahieren, werden üblicherweise die Ankunftszeiten von Erdbebenwellen bestimmt und daraus dann unter anderem Epizenter, Herdtiefe und Magnitude eines Erdbebens berechnet. Die Ereignisdaten werden in Katalogen zusammengestellt, und fast alle seismologisch orientierten Vorhersageforschungen nehmen diese Kataloge zur Grundlage. Jeweils unterschiedliche statistische Verfahren werden mittels der Katalogdaten durchgeführt, um aus der raumzeitlichen Mikro- und Makrobebentätigkeit auf kommende Ereignisse zu schließen.

Derartige Verfahren weisen allerdings in Bezug auf die Erdbebenvorhersage den Nachteil auf, dass sie nicht die Daten der zeitlich kontinuierlichen Seismogramme sondern die Daten der auf einzelne Zeitpunkte reduzierten Kataloginformationen verwenden. Des weiteren werden überregionale Bewegungen wie beispielsweise Fernbeben, Eigenschwingungen etc. in lokalen Katalogdaten im allgemeinen nicht berücksichtigt, da ansonsten die Anzahl der auszuwertenden Ereignisse überproportional ansteigt. Die Untersuchung des Phänomens der Relaisbeben, bei denen die ausbreitende Welle eines Bebens ein weiteres Ereignis auslöst, ist mit rein visuellen Darstellungs- und Auswertungstechniken zu zeitintensiv. Nicht zuletzt weisen die Verfahren gemäss des Stands der Technik den Nachteil auf, dass in einer rein visuellen Darstellung und Auswertung nicht alle zur Erdbebenvorhersage erforderlichen Merkmale deutlich werden.

Soll der Spannungszustand und der zeitliche Verlauf von Vorläuferphänomenen bis zum eigentlichen Bruch der Erdkruste, also bis zur Entstehung eines Erdbebens, studiert werden, müssen die Daten derart aufbereitet werden, das eine Entwicklung erkennbar ist.

Eine im Stand der Technik bekannte dynamische Aufbereitungsart von seismischen Daten ist die Audifikation. Die Grundidee, seismische Signale zu beschleunigen und als Audiosignale zu interpretieren, wurde erstmals von S. D. Speeth im Jahre 1961 in Seismometer Sounds, Journal of the Acustical Society of America 33: 909-916 veröffentlicht. Darin verwandte Speeth das Verfahren, um Signale natürlicher Erdbeben von denjenigen Signalen zu unterscheiden, die von Atomexplosionen stammen.

Franti und Leverault folgten diesem Ansatz und überprüften in einer ausgedehnten Nutzerstudie im Jahre 1965 die durchschnittliche Erfolgsquote (Frantti, G. E. und L. A. Leverault (1965). Auditory Discrimination of Seismic Signals from Earthquakes and Explosions. Bulletin of the Seismological Society of America 55: 1-25).

Im Jahre 1994 publizierte Hayward zur Audifikation und stellte eine relativ ausführliche Einführung in das Verfahren vor (Hayward, C. (1994). Listening to the Earth Sing. Auditory Display. Sonification, Audification, and Auditory Interfaces. G. Kramer. Reading, Addison-Wesley: 369-404).

Dombois schlug 1998 das Verfahren der Audifikation erstmals in Verbindung mit der Erdbebenforschung vor, wobei keine konkreten Angaben zur praktischen Umsetzung gemacht wurden (Dombois, F. (1998). Über Erdbeben. Ein Versuch zur Erweiterung seismologischer Darstellungsweisen. Diss. Berlin, Humboldt-Universität. (Dort insbes. § 17)). Eine qualitative Evaluierung der Klänge, die sich durch die Audifikation von seismologischen Daten ergeben, stellte Dombois in Using Audification in Planetary Seismology, Proceedings of the 2001 International Conference on Auditory Display, Espoo, Finnland, 29 July bis 1. August 2001, vor.

Es ist daher einer Aufgabe der Erfindung, eine Vorrichtung zur Wiedergabe von Festkörperschwingungen zur Vorhersage von Bruchvorgängen in Festkörpern, insbesondere in der Erdkruste zu schaffen, das nicht nur Momentaufnahmen sondern die Gesamtheit der kontinuierlich erfassten Daten verwendet, auch überregionale Bewegungen verarbeitet und wahrnehmbar macht und neben der bereits bekannten visuellen Darstellung und Auswertung auch weitere Mittel verwendet, um eine möglichst genaue Erdbebenvorhersage zu ermöglichen.

Zur Lösung dieser Aufgabe schafft die Erfindung eine Vorrichtung zur Wiedergabe von Festkörperschwingungen zur Vorhersage von Bruchvorgängen in einem Festkörper, insbesondere in der Erdkruste, mit
- mindestens einem Schwingungsaufnahmegerät zur Aufnahme von Schwingungsdaten von der Oberfläche eines Festkörpers,
- einem Datenumwandler zur Umwandlung der von dem Schwingungsaufnahmegerät aufgenommen Schwingungsdaten, wobei der Datenumwandler die Aufnahmezeit der Schwingungsdaten derart komprimiert, dass der Frequenzbereich des Schwingungssignals in den hörbaren Frequenzbereich des Menschen reicht,
- einem Audioverstärker, der die umgewandelten Daten abspielt,
- einer Frequenzweiche,
- mindestens einem Lautsprecher und
- einem Soundfloor, wobei
- die vom Audioverstärker abgespielten Daten über die Frequenzweiche entsprechend ihrer Frequenzen an den mindestens einen Lautsprecher oder den Soundfloor weitergeleitet werden.

Die vorliegende Erfindung basiert auf Erkenntnissen der Wahrnehmungspsychologie und Sinnesphilosophie, dass das Hören in der Wahrnehmung von zeitlicher Dynamik, vom Kontinuum und von der Spannung zwischen Erinnerung und Erwartung die Fähigkeiten des Auges bei weitem übertrifft. Entsprechend werden gemäss der Erfindung die von einem Seismometer aufgenommenen Schwingungsdaten mittels eines Datenumwandlers und anschließend mittels eines Audioverstärkers derart aufbereitet, dass sie für den Benutzer hörbar sind. Da die Frequenzen eines seismischen Signals rund 17 Oktaven umfassen, das menschliche Ohr jedoch nur etwa 10 Oktaven wahrnehmen kann, wird parallel zur Audiowiedergabe eine Schwingungswiedergabe mittels eines Soundfloors verwendet, wobei der Soundfloor den Benutzer den Infrasound des umgewandelten Seismometersignals als Bodenbewegung spüren lässt. Ein Soundfloor ist eine gefederte Fußbodenplatte, unter die ein massereicher Basslautsprecher bzw. Subwoofer montiert ist. Durch die Einspeisung niederfrequenter Audiosignale kann der Boden signalkonform in Vibration versetzt werden und wirkt als eine Art aktiver Schwingboden. Die Soundfloor-Technologie wurde ursprünglich für Tanzflächen in Diskotheken entwickelt, findet aber inzwischen auch in Virtual Reality Displays Verwendung.

Im Gegensatz zu den im Stand der Technik verwendeten seismischen Katalogen lässt die Vorrichtung gemäß der Erfindung den vom Seismometer kontinuierlich aufgenommenen Datenstrom unreduziert. Mittels des Datenumwandlers wird lediglich die Zeitachse des aufgenommenen Datenstroms komprimiert. Damit bleiben überregionale Bewegungen, wie beispielsweise der sogenannte Backgroundnoise, das Einschwingverhalten von Erdbebensignalen und die dynamische Charakteristik bei der akustisch/haptischen Wiedergabe der Daten erhalten. Da das Ohr die Überlagerung mehrerer Schwingungen gut verarbeiten und auch interpretieren kann, ist das akustische Signal für den Menschen einfacher wahrzunehmen als das optische. Das menschliche Ohr trennt Signal und Noise, ohne dass eine Filterung der Messdaten erforderlich ist.

Durch die Beschleunigung beziehungsweise durch die Reduktion der Zeitachse der vom Seismometer aufgenommenen Signale wird der Datenstrom verkürzt. Statt beispielsweise 24 Stunden einer seismischer Registrierung folgen zu müssen, reichen gemäß der Erfindung vorzugsweise 43,2 Sekunden bei einem Datenkompressionsfaktor von 2000. Die Nachbearbeitung der erfassten Daten ist also ausreichend schnell, dass Zeit für die Erwartung kommender Ereignisse, hier also Erdbeben, bleibt. Im Vergleich mit Verfahren des Stands der Technik kann die Auswertung also wesentlich verkürzt werden. Des weiteren wird gemäß der Erfindung der zeitliche Aspekt des Phänomens in einem zeitlichen Medium erfahrbar - die Spannung des Kontinuums kann sowohl gehört als auch gefühlt werden. Aufbauend auf dem Hören vergangener Beben konzentriert sich das Ohr auf Ankündigungen neuer Ereignisse.

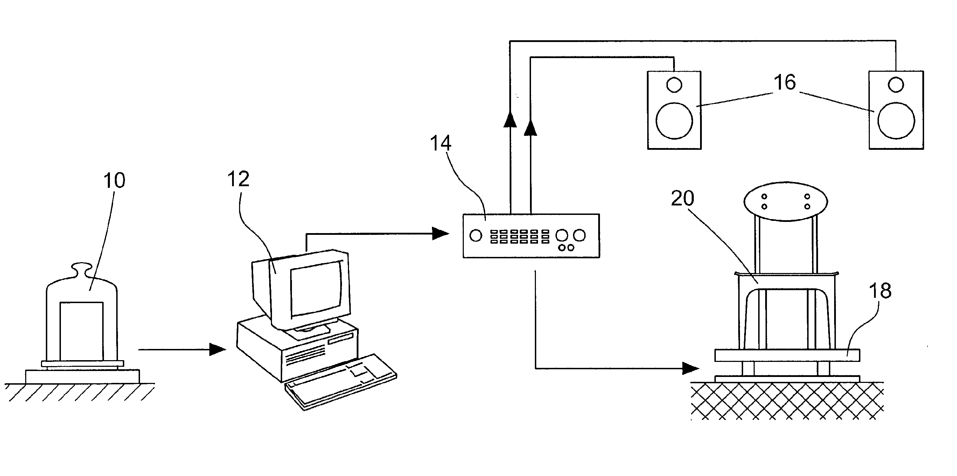

Die Erfindung wird im folgenden unter Bezugnahme auf die Zeichnung und anhand eines Ausführungsbeispieles beschrieben. Es zeigt

In der Zeichnung ist ein handelsübliches Akzelerometer bzw. Breitbandseismometer 10 zu erkennen, das zur Messung der Oberflächenschwingung eines Festkörpers, in diesem Fall der Erdkruste, geeignet ist. Die vom Seismometer 10 aufgenommenen Daten werden einem Rechner 12 zugeführt, der diese Daten derart umwandelt, dass die Zeitachse der kontinuierlich aufgenommenen Daten komprimiert wird, bis der Frequenzbereich des Schwingungssignals in den hörbaren Bereich des Menschen reicht. Bei seismologischen Daten entspricht das etwa einer 2000-fachen Beschleunigung. Gegebenenfalls muss an dieser Stelle mittels des Rechners 12 auch eine Anpassung des Dynamikbereiches der aufgenommenen Daten an das menschliche Gehör erfolgen (vgl. die 24 bzw. 32 Bit Registrierung im seismologischen Bereich im Gegensatz zur 16 Bit Speicherung im Audiobereich). Nach ihrer Umwandlung werden die Daten mittels eines Audioverstärkers 14 abgespielt und über eine Frequenzweiche (nicht gezeigt) an die Lautsprecher 16 und den Soundfloor 18 verteilt. Dabei werden Frequenzen des umgewandelten Datenstroms zwischen 20 Hz und 20 kHz vorzugsweise über die Lautsprecher 16 als Klang, und die niederfrequenten Anteile des umgewandelten Datenstroms unterhalb von 20 Hz vorzugsweise über den Soundfloor als Vibration wiedergegeben. Auf dem Soundfloor 18 kann ein Stuhl 20 angeordnet sein, um dem Bediener eine komfortable Sitzmöglichkeit und eine bessere haptische Wahrnehmung zu bieten.

## Patentansprüche

1. Vorrichtung zur Wiedergabe von Festkörperschwingungen zur Vorhersage von Bruchvorgängen in einem Festkörper, insbesondere in der Erdkruste, mit
- mindestens einem Schwingungsaufnahmegerät zur Aufnahme von Schwingungsdaten von der Oberfläche eines Festkörpers,
- einem Datenumwandler zur Umwandlung der von dem Schwingungsaufnahmegerät aufgenommen Schwingungsdaten, wobei der Datenumwandler die Aufnahmezeit der Schwingungsdaten derart komprimiert, dass der Frequenzbereich des Schwingungssignals in den hörbaren Frequenzbereich des Menschen reicht,
- einem Audioverstärker, der die umgewandelten Daten abspielt,
- einer Frequenzweiche,
- mindestens einem Lautsprecher und
- einem Soundfloor, wobei
- die vom Audioverstärker abgespielten Daten über die Frequenzweiche entsprechend ihrer Frequenzen an den mindestens einen Lautsprecher oder den Soundfloor weitergeleitet werden.

2. Vorrichtung nach Anspruch 1, **dadurch gekennzeichnet, dass** als Schwingungsaufnahmegerät ein Seismometer verwendet wird.

3. Vorrichtung nach einem der vorhergehenden Ansprüche, **dadurch gekennzeichnet, dass** der Datenumwandler die Dynamik der komprimierten Schwingungsdaten an das menschliche Gehör anpasst.

4. Vorrichtung nach einem der vorhergehenden Ansprüche, **dadurch gekennzeichnet, dass** die Anteile des von dem Datenumwandler umgewandelten Datenstroms mit Frequenzen zwischen 20 Hz und 20 kHz über die Lautsprecher als Klang wiedergegeben werden.

5. Vorrichtung nach einem der vorhergehenden Ansprüche, **dadurch gekennzeichnet, dass** die niederfrequenten Anteile des von dem Datenumwandler umgewandelten Datenstroms unterhalb von 20 Hz über den Soundfloor als Vibrationen wiedergegeben werden.

6. Vorrichtung nach einem der vorhergehenden Ansprüche, **dadurch gekennzeichnet, dass** die von dem Schwingungsaufnahmegerät aufgenommenen Schwingungsdaten von dem Datenumwandler mit einem Kompressionsfaktor von etwa 2000 zeitlich komprimiert werden.
